# EUROPÄISCHE PATENTSCHRIFT

(11) **EP 2 882 651 B1**
(45) Veröffentlichungstag und Bekanntmachung des Hinweises auf die Patenterteilung: **19.10.2016**
(21) Anmeldenummer: 13735026.0
(22) Anmeldetag: 10.07.2013
(51) Int. Cl.: B65B 37/00, B65B 61/18, B31B 1/00, B65G 47/28

(54) **VERFAHREN UND VORRICHTUNG ZUM ZUFÜHREN VON BEABSTANDET ZUEINANDER ANGEORDNETEN UND AUSGERICHTETEN SOWIE EINEN FLANSCH AUFWEISENDEN AUSGIESSELEMENTEN**
METHOD AND DEVICE FOR FEEDING SPACED-APART AND ALIGNED FLANGE POURING ELEMENTS
PROCEDE ET DISPOSITIF POUR ALIMENTER ESPACÉS ET ALIGNÉS ÉLÉMENTS VERSEURS AYANT UN REBORD

(30) Priorität: 07.08.2012 DE 102012015465
(43) Veröffentlichungstag der Anmeldung: 17.06.2015
(73) Patentinhaber: SIG Technology AG, 8212 Neuhausen (CH)
(72) Erfinder: RÜEGG, Martin, CH-8248 UHWIESEN (CH)
(74) Vertreter: Cohausz & Florack
(86) Internationale Anmeldenummer: PCT/EP2013/064558
(87) Internationale Veröffentlichungsnummer: WO 2014/023504

(56) Entgegenhaltungen:
- EP-A1- 1 223 028
- EP-A1- 2 103 564
- EP-A2- 1 167 011
- WO-A2-03/024800
- US-A- 3 673 663
- US-A- 4 079 869

## Beschreibung

Die Erfindung betrifft ein Verfahren und eine Vorrichtung zum Zuführen von beabstandet zueinander angeordneten und ausgerichteten sowie einen Flansch aufweisenden Ausgießelementen, wobei die Ausgießelemente jeweils unmittelbar aneinandergereiht zugeführt und anschließend vereinzelt werden.

Beim Applizieren von Ausgießelementen auf Packungen, insbesondere Getränkepackungen, besteht das Bedürfnis, dass die Ausgießelemente, welche meist aus einem Ausgießtubus und einem Befestigungsflansch aufweisenden Grundkörper und aufschraubbaren Deckel sowie ggf. einem im Grundkörper angeordneten Öffnungselement bestehen, dem Applikator in einem vorgegebenen Abstand zugeführt werden müssen, wobei dieser Abstand je nach Applikator und Packungsformat unterschiedlich ausgeführt ist. Um dies zu erreichen, werden die Ausgießelemente zunächst einzeln ausgerichtet, um dann in einer Führungsschiene oder dergleichen dem eigentlichen Applikator zugeführt werden zu können.

Aus der US 5 484 374 A ist ein gattungsgemäßes Verfahren und eine entsprechende Vorrichtung bekannt. Dort werden die Ausgießelemente über einen Zuführungspfad getaktet auf ein Förderband übergeben, wobei der Abstand der Ausgießelemente durch die Taktung und die Geschwindigkeit des Förderbandes variabel bestimmt werden kann. Andere Vorrichtungen sind aus der EP 1803 647 A1 oder EP 1 813 533 A1 bekannt.

Die bekannten Vorrichtungen haben allesamt eine aufwendige Konstruktion mit einer Vielzahl bewegter Einzelteile und entsprechender Baugröße und sind somit kosten- und wartungsintensiv. Teilweise erfahren die Ausgießelemente bei ihrer Vereinzelung eine abrupte Beschleunigung.

Aufgabe der vorliegenden Erfindung ist es, ein Verfahren und eine Vorrichtung der eingangs genannten Art derart auszugestalten und weiterzubilden, dass eine einfache und preiswerte Ausführung gewährleistet ist. Darüber hinaus ist eine klein bauende Konstruktion erwünscht.

Das erfindungsgemäße Verfahren gemäß dem Oberbegriff von Anspruch 1 löst die Aufgabe durch Beschleunigung des jeweils ersten Ausgießelements entlang eines Kreisabschnitts nach dem kurzzeitigen Anhalten der nachfolgenden Ausgießelemente und Übergabe der vereinzelten Ausgießelemente an einen weiteren Transportpfad.

Vorrichtungsmäßig wird die Aufgabe gemäß dem Oberbegriff von Anspruch 5 gelöst durch einen antreibbaren Drehteller mit einer Mehrzahl von darauf drehbar gelagerten Lagerblöcken mit jeweils einem Führungsarm mit einem Auge an seinem freien Ende, einen ortsfest und exzentrisch zum Drehteller angeordneten Zapfen, eine der Anzahl der Lagerblöcke entsprechende Mehrzahl von Gelenkarmen mit jeweils einem Auge an jedem Ende, wobei das eine Ende mit dem Ende des zugehörigen Führungsarm ein Drehgelenk bildet und das andere Ende drehbar um den Zapfen gelagert ist, einen Mitnehmernocken als verlängerte Achse jedes Drehgelenks und ein Führungsschienensystem zum Transport der Ausgießelemente.

Erfindungsgemäß werden die mit Hilfe eines Koppelgetriebes herbeigeführten unterschiedlichen Umfangsgeschwindigkeiten der Vorrichtung ausgenutzt, um die Ausgießelemente auf einem zum Drehteller exzentrischen Kreisabschnitt während ihres Weitertransports zu beschleunigen. Dies führt zu einer äußerst attraktiven Lösung, da die Konstruktion einfach, preiswert und darüber hinaus äußerst klein bauend ist. Weiterhin sind die zu vereinzelnden Ausgießelemente nur moderaten Beschleunigungskräften ausgesetzt. Aufgrund der definierten wiederkehrenden Drehbewegung wird auch der Wartungsaufwand minimiert.

Gemäß einer weiteren Lehre der Erfindung erfolgt das Zuführen der Ausgießelemente linear und bevorzugt kontinuierlich. In weiterer Ausgestaltung der Erfindung werden die Ausgießelemente "auf dem Kopf", also mit oben liegendem Flansch in einer dem Flansch des Ausgießelements seitlich führenden Schiene transportiert. Dies ist besonders zweckmäßig, da auf zusätzliche Elemente wie Greifer oder dergleichen verzichtet werden kann.

Eine weitere Ausführung der Erfindung sieht vor, dass der Drehteller eine zentrale Öffnung aufweist. Da die gesamte Konstruktion der Vorrichtung innerhalb des äußeren Umfangs des Drehtellers stattfindet, bestimmt dieser im Wesentlichen die Größe der gesamten Vorrichtung.

Nach einer weiteren Lehre der Erfindung ist der Drehteller auf einem feststehenden Ring gelagert. Wenn dies im äußeren Bereich des Drehtellers erfolgt, kann dieser in weiterer Ausgestaltung der Erfindung über einen darunter konzentrisch angeordneten inneren Zahnkranz, welcher bevorzugt ein innen verzahnter Zahnradring ist, angetrieben werden.

Die auf dem Drehteller angeordneten Lagerblöcke sind in weiterer Ausführung der Erfindung kugelgelagert ausgeführt, um eine hohe Standzeit der Vorrichtung zu garantieren.

Eine weitere Lehre der Erfindung sieht vor, dass das Führungsschienensystem eine Zuführschiene, eine Beschleunigungsschiene und eine Übergabeschiene aufweist. Die Zuführ- und Übergabeschiene sind dabei zweckmäßigerweise gerade ausgeführt, dagegen umfasst die Beschleunigungsschiene einen Winkel von 180° umspannenden Kreisabschnitt. Der Kreisabschnitt der Beschleunigungsschiene ist dabei in weiterer Ausgestaltung der Erfindung konzentrisch um den Zapfen angeordnet.

Eine weitere Ausgestaltung der Erfindung sieht vor, dass wenigstens die Beschleunigungsschiene Teil einer Führungsplatte ist. Es ist jedoch auch möglich, die Führungsplatte so groß zu gestalten, dass diese auch die Zuführschiene und/oder die Übergabeschiene enthält.

Schließlich ist bevorzugt vorgesehen, dass das Führungsschienensystem in einer einzigen Ebene angeordnet ist. Dies ist besonders zweckmäßig, da so die zu vereinzelnden Ausgießelemente während des Vereinzelungsprozesses nicht gedreht oder vertikal beschleunigt werden müssen.

Die Erfindung ist nachfolgend anhand einer lediglich ein bevorzugtes Ausführungsbeispiel darstellenden Zeichnung näher erläutert. In der Zeichnung zeigen
- Fig. 1: die erfindungsgemäße Vorrichtung in perspektivischer Ansicht,
- Fig. 2: die erfindungsgemäße Vorrichtung in Draufsicht,
- Fig. 3: die erfindungsgemäße Vorrichtung ohne Führungsschienensystem in perspektivischer Ansicht,
- Fig. 4: den Gegenstand aus Fig. 3 in Draufsicht,
- Fig. 5: die erfindungsgemäße Vorrichtung teilzerlegt in perspektivischer Ansicht und
- Fig. 6: den Gegenstand aus Fig. 5 in Draufsicht.

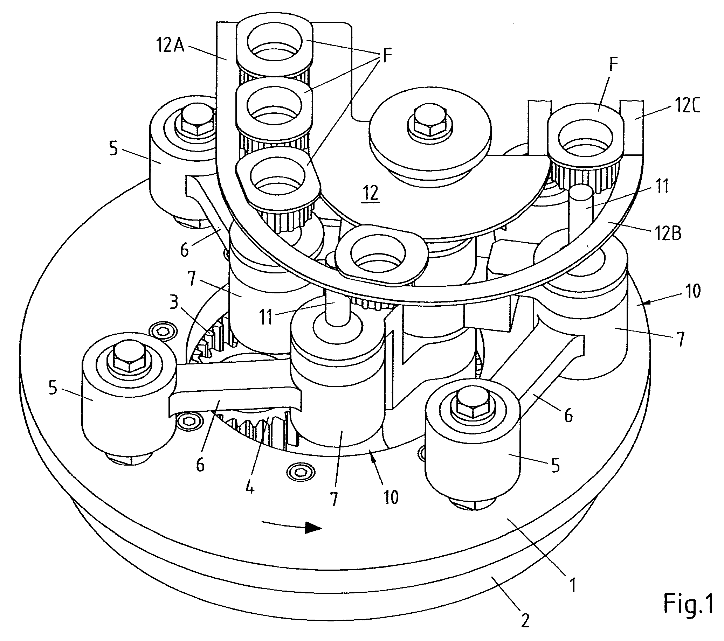

In Fig. 1 ist die erfindungsgemäße Vorrichtung perspektivisch dargestellt. Man erkennt zunächst einen Drehteller 1, welcher auf einem fest angeordneten Ring 2 als Lager drehbar angeordnet ist. Der Ring 2 ist dabei bevorzugt als Außenring ausgeführt, wobei sich im Inneren des Rings 2 ein Innenring (nicht erkennbar) mit Zahnkranz 3 befindet, welcher mit dem Drehteller verschraubt ist und über ein Ritzel 4 angetrieben werden kann.

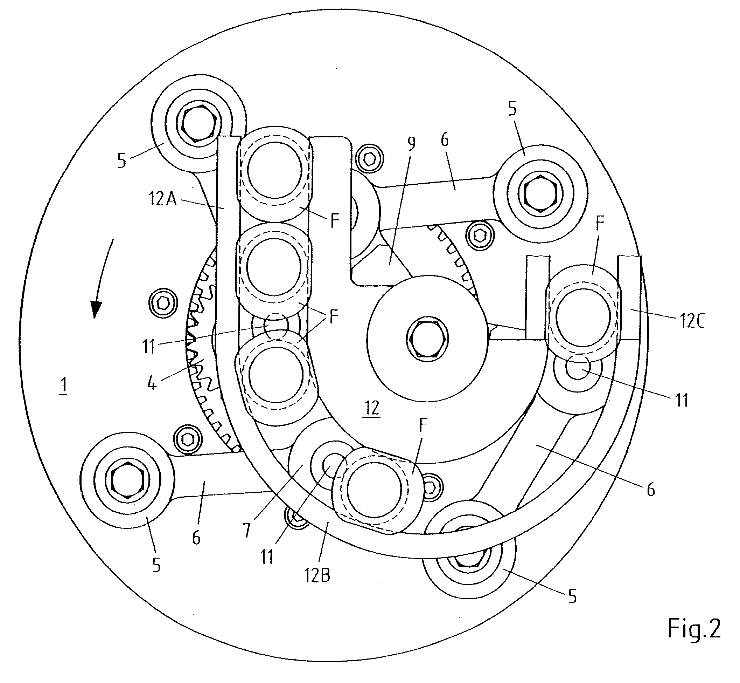

Der Drehteller 1 weist im dargestellten und insoweit bevorzugten Ausführungsbeispiel vier Lagerblöcke 5 auf, welche auf einer konzentrischen Kreisbahn auf dem Drehteller 1 gleichmäßig verteilt drehbar angeordnet sind. Die Lagerblöcke 5 weisen alle einen Führungsarm 6 und an dessen Ende ein Auge 7 auf, wobei die Konstruktionselemente 5, 6, 7 bei allen vier Führungen jeweils identisch ausgebildet sind, wie insbesondere auch den Fig. 2 bis 4 entnommen werden kann.

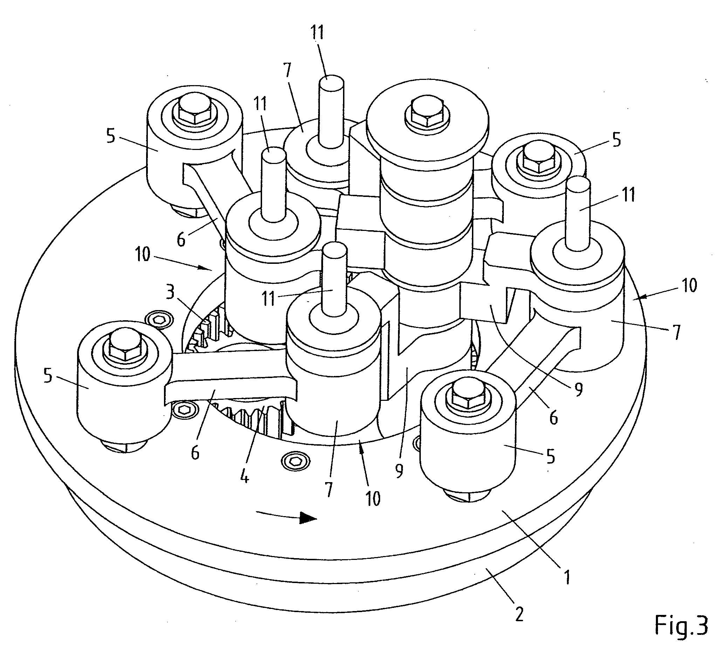

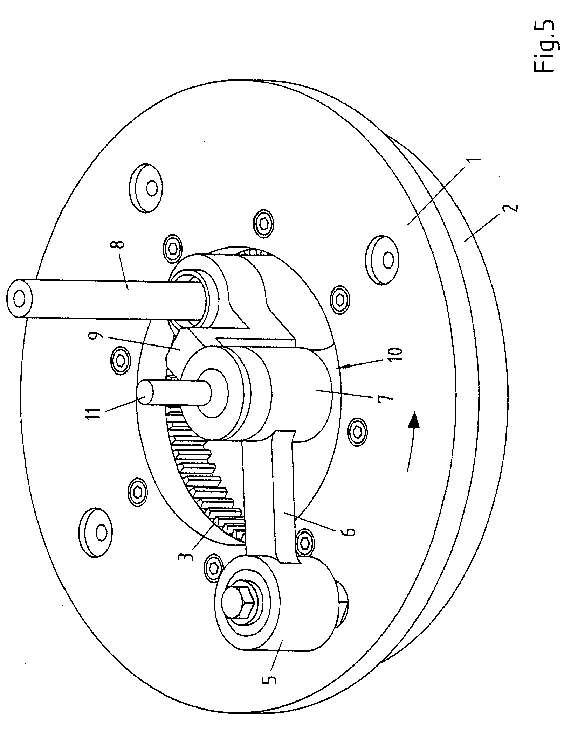

Aus Fig. 5, die eine teilzerlegte erfindungsgemäße Vorrichtung zeigt, geht deutlich hervor, dass im Inneren des Drehtellers 1 ein, exzentrisch zu diesem, ortsfest angeordneter Zapfen 8 vorgesehen ist, der als Lagerzapfen für vier weitere Gelenkarme 9 dient, welche teilweise gekröpft ausgeführt sind, um übereinander am Zapfen 8 geschwenkt werden zu können, wie dies insbesondere aus Fig. 3 deutlich hervorgeht. Die Gelenkarme 9 weisen an beiden Enden jeweils ein Lagerauge auf, von denen das eine, wie zuvor erwähnt, um den Zapfen 8 schwenkbar ist und das andere Ende mit dem jeweiligen Gegenstück, dem Auge 7 am freien Ende der Führungsarme 6, ein Drehgelenk 10 bildet.

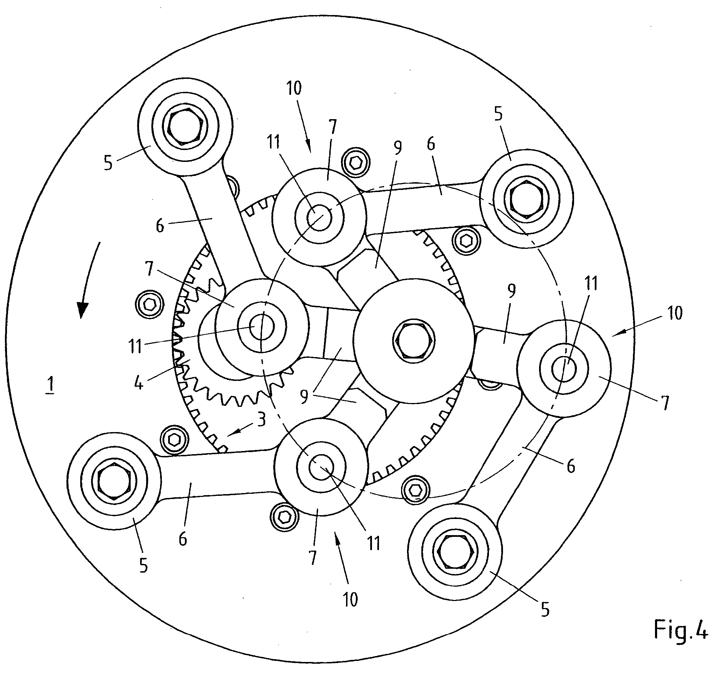

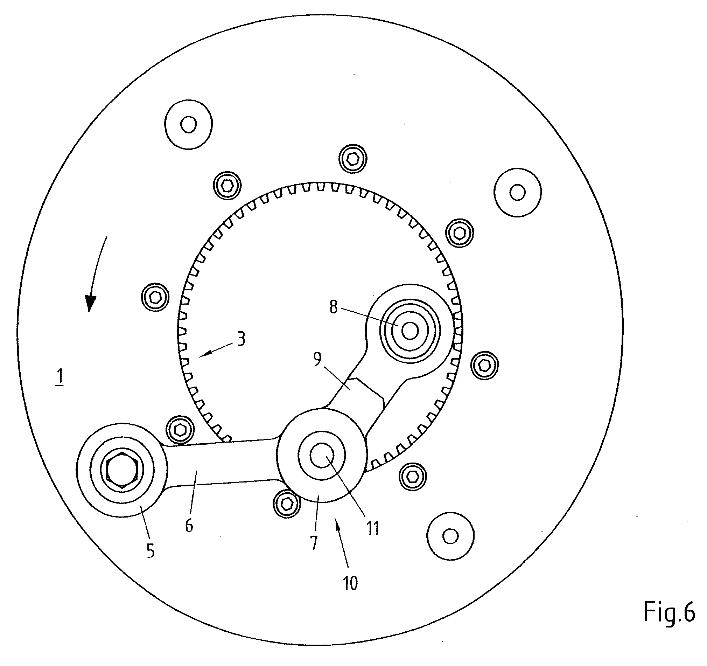

Aus der Draufsicht in Fig. 6 ist das aus Führungsarm 6 und Gelenkarm 9 bestehende Koppelgetriebe zwischen dem schwenkbar Lagerblock 5 und dem feststehenden Zapfen 8 deutlich zu erkennen. Das Drehgelenk 10 und damit auch der Mitnehmernocken 11 vollführt bei dieser Ausgestaltung eine Drehung entlang einer Kreisbahn um den Zapfen 8. Diese Kreisbahn ist in Fig. 4 strichpunktiert dargestellt.

Auf diese Weise bewirkt der Antrieb des Drehtellers ein gleichmäßiges Umlaufen der Lagerblöcke 5 auf einer konzentrischen Kreisbahn, jedoch ein exzentrisches Umlaufen der Drehgelenke 10, jeweils auf den Drehteller 1 bezogen.

Insbesondere ist Fig. 2 zu entnehmen, dass der exzentrische Umlauf der Drehgelenke 10 wiederum auf einer zum Zapfen 8 konzentrischen Kreisbahn erfolgt. Um hier die unterschiedlichen Umfangsgeschwindigkeiten ausnutzen zu können, sind die Drehgelenke 10 mit entsprechenden Mitnehmernocken 11 versehen, welche zwischen die hintereinander heran geführten und nur durch ihren Flansch beabstandeten Ausgießelemente F im Bereich einer Zuführschiene 12A greifen und die Ausgießelemente F dann entlang einer Beschleunigungsschiene 12B beschleunigen und auf diese Weise vereinzeln. Nach dem Umlauf eines 180°-Kreisabschnitts der Beschleunigungsschiene 12B werden die vereinzelten Ausgießelemente F über eine nur angedeutete Übergabeschiene 12C als weiteren Transportpfad an den eigentlichen Applikator übergeben, der die Ausgießelemente F (auf die nicht dargestellten) Packungen appliziert.

In Fig. 1 und 2 ist darüber hinaus zu entnehmen, dass das aus Zuführschiene 12A, Beschleunigungsschiene 12B und Übergabeschiene 12C bestehende Schienensystein zur Führung der Ausgießelemente F auch als Führungsplatte 12 ausgebildet sein kann, um die Konstruktion weiter zu vereinfachen.

Die Erfindung ist nicht auf das dargestellte Ausführungsbeispiel beschränkt, sondern kann darüber hinaus verschiedenste Konstruktionen umfassen, ohne den Grundgedanken der Erfindung zu verlassen.

## Patentansprüche

1. Verfahren zum Zuführen von beabstandet zueinander angeordneten und ausgerichteten sowie einen Flansch aufweisenden Ausgießelementen, wobei die Ausgießelemente jeweils unmittelbar aneinandergereiht zugeführt und anschließend vereinzelt werden,
**gekennzeichnet durch**
Beschleunigung des jeweils ersten Ausgießelements entlang eines Kreisabschnitts **durch** moderate Beschleunimingskräfte unter Ausnutzung von unterschiedlichen Umfangsgeschwindigkeiten herbeigeführt über ein Koppelgetriebe nach dem kurzzeitigen Anhalten der nachfolgenden Ausgießelemente und Übergabe der vereinzelten Ausgießelemente an einen weiteren Transportpfad.

2. Verfahren nach Anspruch 1,
**dadurch gekennzeichnet, dass**
das Zuführen der Ausgießelemente linear erfolgt.

3. Verfahren nach Anspruch 1 oder 2,
**dadurch gekennzeichnet, dass**
das Zuführen der Ausgießelemente kontinuierlich erfolgt.

4. Verfahren nach einem der Ansprüche 1 bis 3,
**dadurch gekennzeichnet, dass**
die Ausgießelemente mit oben liegendem Flansch in einer den Flansch des Ausgießelements seitlich führenden Schiene transportiert werden.

5. Vorrichtung zum Zuführen von beabstandet zueinander angeordneten und ausgerichteten sowie einen Flansch aufweisenden Ausgießelementen (F), wobei die Ausgießelemente (F) jeweils unmittelbar aneinandergereiht zugeführt und anschließend vereinzelt werden,
**gekennzeichnet durch**
ein Koppelgetriebe mit einem antreibbaren Drehteller (1) mit einer Mehrzahl von darauf drehbar gelagerten Lagerblöcken (5) mit jeweils einem Führungsarm (6) mit einem Auge (7) an seinem freien Ende, einem ortsfest und exzentrisch zum Drehteller (1) angeordneten Zapfen (8), einer der Anzahl der Lagerblöcke (5) entsprechenden Mehrzahl von Gelenkarmen (9) mit jeweils einem Auge an jedem Ende, wobei das eine Ende mit dem Auge (7) des zugehörigen Führungsarms (6) ein Drehgelenk (10) bildet und das andere Ende drehbar um den Zapfen (8) gelagert ist, einem Mitnehmernocken (11) als verlängerte Achse jedes Drehgelenks (10) und **durch** ein Führungsschienensystem (12A, 12B, 12C) zum Transport der Ausgießelemente (F).

6. Vorrichtung nach Anspruch 5,
**dadurch gekennzeichnet, dass**
der Drehteller (1) eine zentrale Öffnung aufweist.

7. Vorrichtung nach Anspruch 5 oder 6,
**dadurch gekennzeichnet, dass**
der Drehteller (1) auf einem feststehenden Ring (2) gelagert ist.

8. Vorrichtung nach einem der Ansprüche 5 bis 7,
**dadurch gekennzeichnet, dass**
der Drehteller (1) über einen darunter konzentrisch angeordneten Zahnkranz (3) angetrieben ist.

9. Vorrichtung nach Anspruch 8,
**dadurch gekennzeichnet, dass**
der Zahnkranz (3) ein innenverzahnter Zahnradring ist.

10. Vorrichtung nach einem der Ansprüche 5 bis 9,
**dadurch gekennzeichnet, dass**
die Lagerblöcke (5) kugelgelagert ausgeführt sind.

11. Vorrichtung nach einem der Ansprüche 5 bis 10,
**dadurch gekennzeichnet, dass**
das Führungsschienensystem eine Zuführschiene (12A), eine Beschleunigungsschiene (12B) und eine Übergabeschiene (12C) aufweist.

12. Vorrichtung nach Anspruch 11,
**dadurch gekennzeichnet, dass**
die Beschleunigungsschiene (12B) als ein einen Winkel von 180° umspannender Kreisabschnitt ausgebildet ist

13. Vorrichtung nach Anspruch 12,
**dadurch gekennzeichnet, dass**
der Kreisabschnitt der Beschleunigungsschiene (12B) konzentrisch um den Zapfen (8) angeordnet ist.

14. Vorrichtung nach einem der Ansprüche 11 bis 13,
**dadurch gekennzeichnet, dass**
wenigstens die Beschleunigungsschiene (12B) Teil einer Führungsplatte (12) ist.

15. Vorrichtung nach einem der Ansprüche 11 bis 14,
**dadurch gekennzeichnet, dass**
das Führungsschienensystem (12A, 12B, 12C) in einer Ebene angeordnet ist.

## Claims

1. Method for feeding pouring elements being arranged and positioned at a distance from each other and comprising a flange, wherein the pouring elements are each fed in a row and then are separated,
**characterised by**
acceleration of the respective first pouring element along a segment by moderate forces of acceleration by utilising different peripheral speeds induced through a mechanical linkage after the brief stoppage of the subsequent pouring elements and transfer of the separated pouring elements to another transport path.

2. Method according to claim 1,
**characterised in that**
the pouring elements are fed in a linear manner.

3. Method according to claim 1 or 2,
**characterised in that**
the pouring elements are continuously fed.

4. Method according to any one of claims 1 to 3,
**characterised in that**
the pouring elements with top-mounted flanges are transported in one rail of the laterally-leading the flange of the pouring element.

5. Device for feeding pouring elements (F) being arranged and positioned at a distance from each other and comprising a flange, wherein the pouring elements (F) are each fed in a row and then are separated,
**characterised by**
a mechanical linkage with a drivable rotary plate (1) that has a plurality of bearing blocks (5) pivoted on it, each with a guide arm (6) that has an eye (7) at its free end, a spigot (8) that is fixed and arranged eccentrically to the rotary plate (1), a plurality of hinged brackets (9) corresponding to the number of bearing blocks (5) each with an eye on each end, wherein one of the ends forms a rotary joint (10) with the eye (7) of the corresponding guide arm (6) and the other end is mounted to pivot around the spigot (8), a towing cam (11) as extended axis of each rotary joint (10) and by a guide rail system (12A, 12B, 12C) for transporting the pouring elements (F).

6. Device according to claim 5,
**characterised in that**
the rotary plate (1) has a central opening.

7. Device according to claim 5 or 6,
**characterised in that**
the rotary plate (1) is mounted on a fixed ring (2).

8. Device according to any one of claims 5 to 7,
**characterised in that**
the rotary plate (1) is driven by a sprocket (3) that is concentrically arranged below it.

9. Device according to claim 8,
**characterised in that**
the sprocket (3) is an annular-toothed ring gear.

10. Device according to any one of claims 5 to 9,
**characterised in that**
the bearing blocks (5) are designed as ball bearings.

11. Device according to any one of claims 5 to 10,
**characterised in that**
the guide rail system comprises a feed rail (12A), an acceleration rail (12B) and a transfer rail (12C).

12. Device according to claim 11,
**characterised in that**
the acceleration rail (12B) is designed as a circular segment spanning a 180° angle.

13. Device according to claim 12,
**characterised in that**
the circular segment of the acceleration rail (12B) is arranged concentrically around the spigot (8).

14. Device according to any one of claims 11 to 13,
**characterised in that**
at least the acceleration rail (12B) is part of a guide plate (12).

15. Device according to any one of claims 11 to 14,
**characterised in that**
the guide rail system (12A, 12B, 12C) is arranged on a tier.

## Revendications

1. Procédé d'alimentation en éléments verseurs, disposés à distance les uns des autres et alignes, ainsi que dotés d'un rebord, sachant que les éléments verseurs sont amenés, alignés directement les uns derrière les autres, et ensuite séparés un à un,
**caractérisé par**
l'accélération de chaque premier élément verseur le long d'un segment de cercle, par des forces d'accélération modérées, en utilisant différentes vitesses périphériques, par l'intermédiaire d'un entraînement couplé, après l'arrêt de courte durée de l'élément verseur suivant et le transfert des éléments verseurs un à un sur une autre voie de transport.

2. Procédé selon la revendication 1,
**caractérisé en ce que**
l'amenée des éléments verseurs est effectuée linéairement.

3. Procédé selon revendication 1 ou 2,
**caractérisé en ce que**
l'amenée des éléments verseurs est effectuée en continu.

4. Procédé selon l'une des revendications 1 à 3,
**caractérisé en ce que**
les éléments verseurs sont transportés, le rebord en haut, dans un rail qui guide latéralement le rebord de l'élément verseur.

5. Dispositif pour l'alimentation en éléments verseurs (F), disposés à distance les uns des autres et alignes, ainsi que dotés d'un rebord, sachant que les éléments verseurs (F) sont amenés, alignés directement les uns derrière les autres, et ensuite séparés un à un,
**caractérisé par**
un engrenage couplé, avec un plateau tournant (1) entraînable, avec une pluralité de blocs de support (5), montés en rotation sur celui-ci, dotés chacun d'un bras de guidage (6), avec un oeil (7) à son extrémité libre, avec une tige (8) fixe et disposé excentriquement par rapport au plateau tournant (1), avec une pluralité de bras articulés (9), correspondant au nombre de blocs de support (5), lesdits bras étant dotés d'un oeil à chaque extrémité, sachant que l'une des extrémités forme une articulation rotative (10) avec l'oeil (7) du bras de guidage (6) associé, et que l'autre extrémité est montée en rotation autour de la tige (8), et avec une came d'entraînement (11) en tant qu'axe prolongé de chaque articulation rotative (10) et par un système de rails de guidage (12A, 12B, 12C) pour le transport des éléments verseurs (F).

6. Dispositif selon la revendication 5,
**caractérisé en ce que**
le plateau tournant (1) est doté d'une ouverture centrale.

7. Dispositif selon revendication 5 ou 6,
**caractérisé en ce que**
le plateau tournant (1) est monté sur un anneau fixe (2).

8. Dispositif selon l'une des revendications 5 à 7,
**caractérisé en ce que**
le plateau tournant (1) est entraîné par l'intermédiaire d'une couronne dentée (3), disposée concentriquement sous celui-ci.

9. Dispositif selon la revendication 8,
**caractérisé en ce que**
la couronne dentée (3) est une bague dentée à l'intérieur.

10. Dispositif selon l'une des revendications 5 à 9,
**caractérisé en ce que**
les blocs de support (5) sont montés sur des roulements à billes.

11. Dispositif selon l'une des revendications 5 à 10,
**caractérisé en ce que**
le système de rails de guidage est doté d'un rail d'amenée (12A), d'un rail d'accélération (12B) et d'un rail de transfert (12C).

12. Dispositif selon la revendication 11,
**caractérisé en ce que**
le rail d'accélération (12B) est réalisé sous la forme d'un segment de cercle couvrant un angle de 180°.

13. Dispositif selon la revendication 12,
**caractérisé en ce que**
le segment de cercle du rail d'accélération (12B) est disposé concentriquement par rapport à la tige (8).

14. Dispositif selon l'une des revendications 11 à 13,
**caractérisé en ce que**
le rail d'accélération (12B), au moins, fait partie d'une plaque de guidage (12).

15. Dispositif selon l'une des revendications 11 à 14,
**caractérisé en ce que**
le système de rails de guidage (12A, 12B, 12C) est disposé sur un plan.
